**Europäisches Patentamt**

(19) **European Patent Office**

**Office européen des brevets**

(11) Veröffentlichungsnummer: **0 114 408**
**B1**

(12) ## EUROPÄISCHE PATENTSCHRIFT

(45) Veröffentlichungstag der Patentschrift:
**16.08.89**

(51) Int. Cl.⁴: **G 01 F 23/28, G 01 F 23/04**

(21) Anmeldenummer: **83113158.6**

(22) Anmeldetag: **28.12.83**

(54) **Verfahren zur Bestimmung des Schlammspiegels, insbesondere in Absetzbecken von Kläranlagen und Vorrichtung zur Durchführung des Verfahrens.**

(30) Priorität: **28.12.82 DE 3248244**
**28.12.82 DE 3248243**

(43) Veröffentlichungstag der Anmeldung:
**01.08.84 Patentblatt 84/31**

(45) Bekanntmachung des Hinweises auf die Patenterteilung:
**16.08.89 Patentblatt 89/33**

(84) Benannte Vertragsstaaten:
**AT BE CH FR GB IT LI LU NL SE**

(56) Entgegenhaltungen:
**DE-A- 2 354 125**
**FR-A- 2 482 290**
**US-A- 4 162 473**

(73) Patentinhaber: **Ambrosius, Bernd, Hofhausstrasse 66,**
**D-6000 Frankfurt am Main 60 (DE)**

(72) Erfinder: **Ambrosius, Bernd, Hofhausstrasse 66,**
**D-6000 Frankfurt am Main 60 (DE)**

(74) Vertreter: **Schaafhausen, Ludwig Richard, Dipl.-Phys. et al, KEIL & SCHAAFHAUSEN Patentanwälte**
**Eysseneckstrasse 31, D-6000 Frankfurt am Main 1 (DE)**

**Beschreibung**

Die Erfindung betrifft ein Verfahren zur Bestimmung des Schlammspiegels in einer Flüssigkeit, insbesondere in Absetzbecken von Kläranlagen sowie eine Vorrichtung zur Durchführung des Verfahrens.

In Anlagen zur Reinigung von Abwasser (Kläranlagen) werden sowohl bei der mechanischen Reinigung als auch bei der biologischen Reinigung Absetzbecken verwendet, in denen die im Abwasser vorhandenen Sinkstoffe infolge langer Verweilzeit und geringer Fließgeschwindigkeit abgeschieden und zurückgehalten werden. Die sich absetzenden Stoffe werden allgemein als Schlamm bezeichnet. Dieser weist einen Wassergehalt von mehr als 90% auf und muß vor seiner Weiterbehandlung noch eingedickt werden. Die Weiterbehandlung erfolgt in bekannter Weise durch unterschiedliche Verfahren (z.B. Trockenbeete, anaerobe Faulung).

In allen Becken, in denen Absetzvorgänge stattfinden, muß die Höhe des Schlammstandes im Becken (Schlammspiegellinie) bestimmt werden, um Räum- und/oder Abpumpvorgänge einzuleiten.

Zur Steuerung der in Abwasseranlagen vorhandenen selbsttätigen Räumvorrichtungen (z.B. Schildräumer, Kettenräumer oder Pendelschildräumer), die in hin- und hergehenden Bewegungen am Boden eines Absetzbeckens den abgesetzten Schlamm in einen Pumpensumpf schieben, von wo aus er durch Pumpen abgesaugt und weitergeführt wird, oder bei der Verwendung von Becken, in denen sich der Schlamm selbsttätig, d.h. durch Schwerkraft, an einer dafür bestimmten Stelle, z.B. einem Trichter, sammelt, von wo aus er abgepumpt wird, ist es erforderlich, die Menge des abgesetzten Schlammes, d.h. die Höhe des Schlammspiegels zu kennen.

Dieser wird herkömmlicherweise mittels manueller Meßmethoden in Form von Meßstäben bzw. Meßspiegeln von einem Bediensteten der Kläranlage bestimmt. Dieses ist nicht nur umständlich und ungenau, sondern bei widrigen Witterungsumständen, insbesondere im Winter, wenn überhaupt, so nur äußerst schwierig durchzuführen.

Aufgabe der vorliegenden Erfindung ist es daher, ein Verfahren der eingangs genannten Art anzugeben, durch das es möglich wird, eine sehr einfache Vorrichtung zur Durchführung des Verfahrens zu verwenden, die entweder selbsttätig oder in Verbindung mit einem Prozeßrechner einer Kläranlage den Schlammspiegel bestimmt.

Diese Aufgabe wird erfindungsgemäß dadurch gelöst, daß ein Meßkörper, dessen obere Fläche eben und von vorbestimmter Form und Größe ist, kontinuierlich in eine Flüssigkeit abgesenkt wird, daß ein von einer ortsfest angeordneten Kamera aufgenommenes Bild des Meßkörpers mit dem tatsächlich zurückgelegten Weg des Meßkörpers verglichen wird, wobei das von der Kamera aufgenommene Bild in einem Rechner digitalisiert, hieraus die Größe des gemessenen Bildes berechnet und dieses Bild mit den von einem Weggeber gegebenen Informationen über den tatsächlich zurückgelegten Weg des Meßkörpers und dem hieraus errechneten Wert der erwarteten Form und Größe des Bildes in dem Rechner verglichen wird, daß aus dem Sprung in der Helligkeitsabnahme der von der Kamera aufgenommenen Bilder, die ein Eintauchen des Meßkörpers in den abgesetzten Schlamm anzeigen, die Höhe der Flüssigkeit über dem Schlammspiegel bestimmt wird und daß die am Ausgang des Rechners enthaltenen Meßsignale zur Auswertung bzw. Steuerung der Einrichtung zum Abpumpen des abgesetzten Schlammes weiterverarbeitet werden.

Damit läßt sich auf einfachste Weise unter Ausnutzung bekannter optischer Gesetze die Bestimmung des Schlammspiegels automatisieren und präzisieren. Da es für dieses Meßverfahren nicht mehr notwendig ist, daß sich eine Person auf die über dem Absetzbecken befindliche Brücke zur Durchführung einer Messung begibt, lassen sich diese Messungen beliebig häufig wiederholen. Außerdem braucht der Meßkörper nur zur eigentlichen Messung in die Flüssigkeit abgesenkt werden, wodurch dessen Lebensdauer erheblich verlängert wird, und die Abpumpeinrichtung läßt sich so steuern, daß die Pumpen nur so lange laufen, wie dies für die Abräumung notwendig ist, was zu einer erheblichen Energieeinsparung führt.

Es hat sich als äußerst vorteilhaft erwiesen, daß die Berechnung des Schlammspiegels vom Rechner unter gleichzeitiger Kompensation der Umgebungseinflüsse und unter ständiger Selbstdiagnose des Meßkörpers erfolgt und eine Störung der Messung umgehend gemeldet wird.

Zur Durchführung des Verfahrens zur Bestimmung des Schlammspiegels in einer Flüssigkeit, insbesondere in Absetzbecken von Kläranlagen ist erfindungsgemäß vorgesehen, daß in einer ortsfest angeordneten Hülle, die oben geschlossen und unten offen ist, ein Meßkörper mittels einer Absenkeinrichtung lotrecht bewegbar ist, wobei die einer Kamera zugewandte Fläche des Meßkörpers eben und von vorbestimmter Form und Größe ist, und daß innerhalb der Hülle die Kamera zum Aufnehmen des Bildes des Meßkörpers, ein Wegmesser für den vom Meßkörper zurückgelegten Weg, ein Vergleichslichtfühler zur Bestimmung des mittleren Grauwertes der Flüssigkeitsoberfläche und ein Rechner fest angeordnet sind.

Eine derartige Vorrichtung ist nicht nur sehr einfach in ihrem Aufbau, sondern auch äußerst widerstandsfähig, so daß sie sich auch unter widrigen Umständen im Dauereinsatz verwenden läßt. Dadurch, daß sich der Meßkopf in seiner Ruhelage innerhalb der zylindrischen Hülle befindet, ist er gegen Umwelt- und Witterungseinflüsse geschützt, kann nach Betrieb in Ruhe trocknen und nicht von Mikroorganismen bewachsen werden, wodurch seine Funktionstüchtigkeit und Lebensdauer wesentlich erhöht wird.

Beim erfindungsgemäßen Gegenstand ist die Hülle gemäß einer bevorzugten Ausführungsform zylindrisch und an ihrer Oberseite abgerundet. Damit ist die Hülle sehr kompakt und gewährt auch bei widrigen Witterungsumständen einen

ausreichenden Schutz für die innerhalb der Hülle angeordnete Meßeinrichtung und läßt insbesondere Regenwasser leicht abfließen.

Zweckmäßigerweise besteht die Hülle aus einem metallischen Material oder aus einem glasfaserverstärkten Kunststoff. Dieser ist korrosionsbeständig und gewährleistet eine lange Lebensdauer der Vorrichtung. Um ein gleichförmiges Absinken des Meßkörpers zu erreichen, kann der Meßkörper auch kegelig ausgebildet sein. Außerdem kann, falls der Meßkörper nicht schon an sich schwer genug ist, an seiner Unterseite ein zusätzliches Gewicht vorgesehen sein.

Damit auch bei Becken mit unterschiedlichem Flüssigkeitsspiegel die Messungen einfach durchgeführt werden können, ist gemäß einer Ausgestaltung des Erfindungsgedankens an der Unterseite des Meßkörpers ein Eintauchfühler angeordnet.

In besonders einfacher Weise besteht die Absenkeinrichtung aus drei Seilen, an denen der Meßkörper befestigt ist und die über antreibbare Seiltrommeln geführt sind. Damit wird gewährleistet, daß sich der Meßkörper immer in einer waagerechten Lage befindet. Die Seiltrommeln der Absenkeinrichtung können dabei entweder motorisch, hydraulisch oder pneumatisch angetrieben sein.

Insbesondere für einen Einsatz in kalten Regionen ist gemäß einer Ausgestaltung der Erfindung innerhalb der zylindrischen Hülle eine Heizeinrichtung vorgesehen. Damit kann die Vorrichtung im Winter nicht einfrieren und es ist gewährleistet, daß die relative Feuchte in dem unten offenen Zylinder unter der Feuchte der umgebenden Außenluft liegt.

In besonders einfacher Weise läßt sich die Hülle an einer oberhalb eines Absetzbeckens vorhandenen Brücke befestigen.

Die Erfindung wird nachfolgend an einem Ausführungsbeispiel näher erläutert, das in der Zeichnung dargestellt ist. Die einzige Figur zeigt eine Prinzipskizze, aus der sich sowohl der Verfahrensablauf, als auch der grundsätzliche Aufbau der erfindungsgemäßen Vorrichtung ersehen läßt.

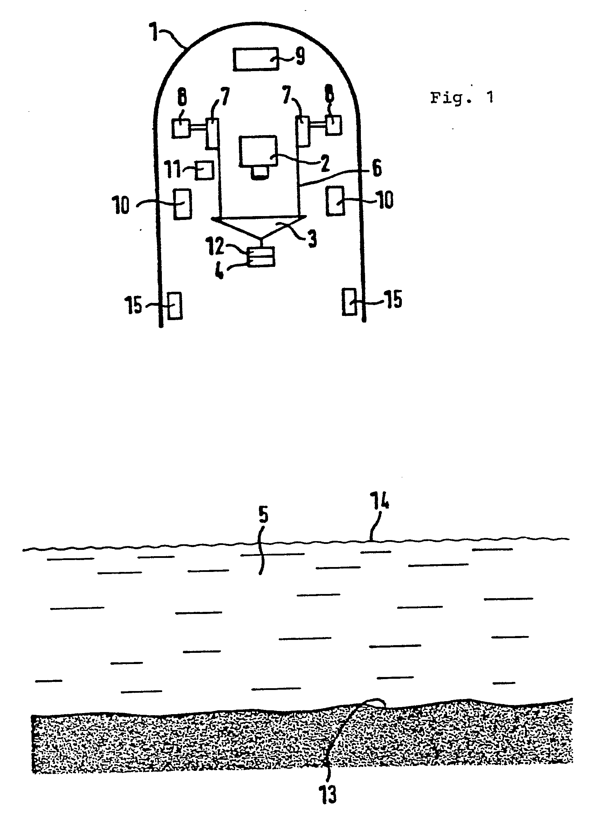

Die in Figur 1 dargestellte Vorrichtung zur Bestimmung des Schlammspiegels ist in einer zylindrischen Hülle 1 angeordnet, deren Oberteil nach außen gewölbt ausgebildet ist, und die nach unten offen ist. Innerhalb der Hülle 1 ist eine Kamera 2 fest angebracht, die auf einen lotrecht bewegbaren Meßkörper 3 ausgerichtet ist. Dieser Meßkörper 3 ist in der skizzierten Darstellung plattenförmig ausgebildet; es kann jedoch auch ein kegeliger Körper verwendet werden. Auch in diesem Fall muß aber die der Kamera 2 zugewandte Oberfläche des Meßkörpers 3 eben und von vorbestimmter Form und Größe ausgebildet sein. An der Unterseite des Meßkörpers 3 ist ein zusätzliches Gewicht 4 angebracht, das ein gleichmäßiges Absenken des Meßkörpers 3 in der Flüssigkeit 5 eines nicht dargestellten Klärbeckens gewährleisten soll.

Der Meßkörper 3 ist an vorzugsweise drei Seilen 6 aufgehängt, die über Seiltrommeln 7 abgelassen werden können. Hierzu ist ein motorischer Antrieb 8 vorgesehen.

Zur Steuerung der gesamten Vorrichtung und zur Auswertung der Meßergebnisse ist ein an sich bekannter Rechner 9 ebenfalls innerhalb der zylindrischen Hülle 1 angeordnet. Sofern die Kläranlage einen eigenen Prozeßrechner hat, kann der Rechner 9 auch an diesen angeschlossen werden und lediglich als «Meßgerät» dienen, das von dem zentralen Prozeßrechner die Steuerbefehle erhält und seine Meßergebnisse an den zentralen Rechner zur Auswertung weitergibt.

Zur Durchführung des erfindungsgemäßen Verfahrens sind in der zylindrischen Hülle 1 noch ein Vergleichslichtfühler 10 zur Bestimmung des mittleren Grauwertes der Flüssigkeitsoberfläche, ein Wegmesser 11 für den vom Meßkörper 3 zurückgelegten Weg und an der Unterseite des Meßkörpers 3 ein Eintauchfühler 12 angeordnet.

Die Vorrichtung arbeitet wie folgt:

Die aus Metall oder aus einem glasfaserverstärkten Kunststoff bestehende Hülle 1 ist an einer über einem Klärbecken vorhandenen, nicht dargestellten Brücke fest angebracht. Zur Bestimmung der Höhe des Schlammspiegels in der Flüssigkeit 13 in dem Klärbecken wird von dem Rechner 9 an den Antrieb 8 der Winden der Seiltrommeln 7 der Befehl erteilt, den an den Seilen 6 hängenden Meßkörper 3 abzusenken.

Von der Kamera 2 wird das Bild des hellfarbigen Meßkörpers 3 aufgenommen und an den Rechner 9 weitergegeben, wo es in bekannter Weise digitalisiert wird. Gleichzeitig erhält der Rechner 9 von dem Wegmesser 11 die Informationen über den tatsächlich zurückgelegten Weg des Meßkörpers 3. Von dem Vergleichslichtfühler 10 erhält der Rechner 9 die Information über den mittleren Grauwert der Oberfläche 14 der Flüssigkeit 5 (Flüssigkeitsspiegel).

Aus dem zurückgelegten Weg läßt sich nach den bekannten optischen Gesetzen berechnen, wie groß sich der Meßkörper abbilden müßte. Dieses (erwartete) Bild wird fortwährend mit dem von der Kamera aufgenommenen Bild verglichen. Sobald der Meßkörper in den Schlamm eintaucht, ergibt sich eine Abweichung der von dem Rechner 9 in Kenntnis des tatsächlich zurückgelegten Weges des Meßkörpers aufgrund der Informationen des Wegmessers 11 errechneten Größe des erwarteten Bildes von der Größe des von der Kamera 2 aufgenommenen Bildes. Diese Unstetigkeit in der Größenabnahme des von der Kamera aufgenommenen Bildes gibt die Information über die Höhe des Schlammspiegels 13.

Von dem Rechner 9 werden bei der Auswertung die Umgebungseinflüsse zur Kompensation des Meßergebnisses mit berücksichtigt. So wird u.a. von dem Eintauchfühler 12 dem Rechner 9 das Unterschreiten des Flüssigkeitsspiegels 14 mitgeteilt. Auch erfolgt eine Selbstdiagnose des Meßkörpers 3, die sich als Folge der Verschmutzung des Meßkörpers ergibt.

Neben einer Steuerung der Absenkeinrichtung der erfindungsgemäßen Vorrichtung wird von dem Rechner 9 oder, wie oben ausgeführt, von dem Prozeßrechner der Kläranlage der Betrieb der den abgesetzten Schlamm wegbefördernden Mittel, insbesondere von Pumpen, gesteuert.

Durch die definierte Ausbildung der der Kamera 2 zugewandten Oberfläche des Meßkörpers 3 und die digitale Verarbeitung des Bildes lassen sich Störquellen auf einfachste Weise eliminieren. Zur besseren Erfassung des Bildes weist der Meßkörper 3 eine helle Oberfläche auf; insbesondere eine weiße oder spiegelnde Oberfläche hat sich als besonders geeignet erwiesen.

Die von dem Rechner 9 ermittelten Meßergebnisse lassen sich entweder über einen Schreiber oder Drucker ausdrucken, direkt als Einschaltbefehl beispielsweise für eine Pumpe verwenden oder über ein Stellglied bzw. den Zentralrechner der Kläranlage weiterverarbeiten.

Um auch während der Winterzeit den Betrieb der Vorrichtung aufrechthalten zu können, ist innerhalb der Hülle 1 eine Heizeinrichtung 15 vorgesehen. Diese kann aus mehreren kleinen Heizelementen bestehen, die vorzugsweise am unteren Innenrand der Hülle 1 angeordnet sind.

## Patentansprüche

1. Verfahren zur Bestimmung des Schlammspiegels in einer Flüssigkeit, insbesondere in Absetzbecken von Kläranlagen, dadurch gekennzeichnet, daß ein Meßkörper, dessen obere Fläche eben und von vorbestimmter Form und Größe ist, kontinuierlich in eine Flüssigkeit abgesenkt wird, daß ein von einer ortsfest angeordneten Kamera aufgenommenes Bild des Meßkörpers mit dem tatsächlich zurückgelegten Weg des Meßkörpers verglichen wird, wobei das von der Kamera aufgenommene Bild in einem Rechner digitalisiert, hieraus die Größe des gemessenen Bildes berechnet und dieses Bild mit den von einem Weggeber gegebenen Informationen über den tatsächlich zurückgelegten Weg des Meßkörpers und dem hieraus errechneten Wert der erwarteten Form und Größe des Bildes in dem Rechner verglichen wird, daß aus dem Sprung in der Helligkeitsabnahme der von der Kamera aufgenommenen Bilder, die ein Eintauchen des Meßkörpers in den abgesetzten Schlamm anzeigen, die Höhe der Flüssigkeit über dem Schlammspiegel bestimmt wird und daß die am Ausgang des Rechners erhaltenen Meßsignale zur Auswertung bzw. Steuerung der Einrichtung zum Abpumpen des abgesetzten Schlammes weiterverarbeitet werden.

2. Verfahren nach Anspruch 1, dadurch gekennzeichnet, daß die Berechnung des Schlammspiegels vom Rechner unter gleichzeitiger Kompensation der Umgebungseinflüsse und unter ständiger Selbstdiagnose des Meßkörpers erfolgt und eine Störung der Messung umgehend gemeldet wird.

3. Vorrichtung zur Bestimmung des Schlammspiegels in einer Flüssigkeit, insbesondere in Absetzbecken von Kläranlagen, dadurch gekennzeichnet, daß in einer ortsfest angeordneten Hülle (1), die oben geschlossen und unten offen ist, ein Meßkörper (3) mittels einer Absenkeinrichtung (6, 7, 8) lotrecht bewegbar ist, wobei die einer Kamera (2) zugewandte Fläche des Meßkörpers eben und von vorbestimmter Form und Größe ist, und daß innerhalb der Hülle (1) die Kamera (2) zum Aufnehmen des Bildes des Meßkörpers (3), ein Wegmesser (11) für den vom Meßkörper (3) zurückgelegten Weg, ein Vergleichslichtfühler (10) zur Bestimmung des mittleren Grauwertes der Flüssigkeitsoberfläche und ein Rechner (9) fest angeordnet sind.

4. Vorrichtung nach Anspruch 3, dadurch gekennzeichnet, daß die Hülle (1) zylindrisch und an ihrer Oberseite abgerundet ausgebildet ist.

5. Vorrichtung nach Anspruch 3 oder 4, dadurch gekennzeichnet, daß die Hülle (1) aus einem metallischen Material oder aus glasfaserverstärktem Kunststoff besteht.

6. Vorrichtung nach Anspruch 3, dadurch gekennzeichnet, daß der Meßkörper (3) kegelig ausgebildet ist.

7. Vorrichtung nach einem der Ansprüche 3 oder 6, dadurch gekennzeichnet, daß an der Unterseite des Meßkörpers (3) ein Gewicht (4) und/oder ein Eintauchfühler (12) angeordnet sind.

8. Vorrichtung nach Anspruch 3, dadurch gekennzeichnet, daß die Absenkeinrichtung aus drei Seilen (6, 7) besteht, an denen der Meßkörper (3) bzw. Trübungsmesser (2) befestigt sind, wobei die Seile (6, 7, 8) über antreibbare Seiltrommeln (7, 8) gewickelt sind, die motorisch, hydraulisch oder pneumatisch angetrieben sind.

9. Vorrichtung nach einem der Ansprüche 3 bis 8, dadurch gekennzeichnet, daß innerhalb der zylindrischen Hülle (1) eine Heizeinrichtung (15) vorgesehen ist.

10. Vorrichtung nach einem der Ansprüche 3 bis 9, dadurch gekennzeichnet, daß die Hülle (1) an einer oberhalb eines Absetzbeckens vorhandenen Brücke angebracht ist.

## Claims

1. Method for determining the level of sludge in a liquid, especially in settling pools of sewage treatment plants, characterised in that a measuring element, the upper surface of which is flat and of predetermined shape and size, is lowered continuously into a liquid, that an image of the measuring element taken by a fixed camera is compared with the distance that the measuring element has actually travelled, the image taken by the camera being digitalised in a computer, the size of the measured image being calculated therefrom, and this image being compared in the computer with the information, provided by a position sensor, relating to the distance actually travelled by the measuring element and with the value, calculated therefrom, of the expected shape and size of the image, that the height of the liquid above the level of the sludge is determined from the sudden decrease in brightness of the images taken by the camera that show the measuring element dipping into the deposited sludge, and that the measurement signals, obtained at the output of the computer, are processed further for evaluating and/or controlling the device for pumping off the sludge that has settled.

2. Method according to claim 1, characterised in that the calculation of the sludge level by the computer is effected with simultaneous compensation of atmospheric influences and constant self-diagnosis by the measuring element, and interference in the measurement is signalled immediately.

3. Device for determining the level of sludge in a liquid, especially in settling pools of sewage treatment plants, characterised in that in a fixed casing (1), which is closed at the top and open at the bottom, a measuring element (3) is movable vertically by means of a lowering device (6, 7, 8), the surface of the measuring element facing a camera (2) being flat and of predetermined shape and size, and that arranged in a fixed manner inside the casing (1) are the camera (2) for taking the image of the measuring element (3), a position sensor (11) for the distance travelled by the measuring element (3), a comparison light sensor (10) for determining the average grey scale value of the surface of the liquid and a computer (9).

4. Device according to claim 3, characterised in that the casing (1) is cylindrical and rounded at the top.

5. Device according to claim 3 or 4, characterised in that the casing (1) consists of a metallic material or of glass-fibre-reinforced plastics.

6. Device according to claim 3, characterised in that the measuring element (3) is tapered.

7. Device according to claim 3 or 6, characterised in that a weight (4) and/or an immersion sensor (12) is arranged on the base of the measuring element (3).

8. Device according to claim 3, characterised in that the lowering device comprises three cables (6, 7) to which the measuring element (3) and/or the turbidity-measuring device (2) are secured, the cables (6, 7) being wound over drivable cable drums (7, 8) which are driven by a motor, hydraulically or pneumatically.

9. Device according to any one of Claims 3 to 8, characterised in that a heating device (15) is provided inside the cylindrical casing (1).

10. Device according to any one of claims 3 to 9, characterised in that the casing (1) is attached to a bridge above the settling pool.

## Revendications

1. Procédé pour la détermination du niveau des boues dans un liquide, en particulier dans des bassins de décantation d'installations de clarification, caractérisé en ce qu'un corps de mesure, dont la face supérieure est plane et de forme et de grandeur déterminées, est immergé continuellement dans un liquide, qu'une photo prise, par une caméra en position fixe, du corps de mesure est comparée avec le trajet réellement parcouru par le corps de mesure, la photo prise par la caméra étant digitalisée dans un ordinateur, grâce à quoi la grandeur de l'image mesurée est calculée et cette image est comparée dans l'ordinateur avec les informations fournies par un indicateur de trajet concernant le trajet réellement parcouru par le corps de mesure et la valeur calculée à partir de là concernant la forme et la grandeur attendues de l'image, et qu'à partir de la discontinuité dans la décroissance de la luminosité des images prises par la caméra, qui indiquent l'immersion du corps de mesure dans la boue déposée, la hauteur du liquide au dessus du niveau de boue est déterminée, et le signal de mesure obtenu à la sortie de l'ordinateur est transformé pour évaluation ou commande du dispositif d'évacuation par pompage des boues déposées.

2. Procédé selon la revendication 1, caractérisé en ce que le calcul du niveau de boue par l'ordinateur s'effectue avec compensation simultanée des influences du milieu et avec autodiagnostic permanent du corps de mesure et qu'une interruption des mesures est largement évitée.

3. Dispositif pour la détermination du niveau des boues dans un liquide, en particulier dans des bassins de décantation d'installations de clarification, caractérisé en ce que dans une gaine (1) installée de manière fixe, qui est fermée en haut et ouverte en bas, un corps de mesure (3) est mobile verticalement au moyen d'un dispositif d'immersion (6, 7, 8), la face du corps de mesure tournée vers la caméra (2) étant plane et de forme et de grandeur déterminées, et qu'à l'intérieur de la gaine (1) de la caméra (2) pour la prise des photos du corps de mesure (3), il est disposé d'une manière fixe un instrument de mesure de la distance (11) pour le trajet parcouru par le corps de mesure (3), un détecteur de lumière comparatif (10) pour la détermination de la valeur moyenne de gris de la surface du liquide, et un ordinateur (9).

4. Dispositif selon la revendication 3, caractérisé en ce que la gaine (1) est cylindrique et que sa face supérieure est arrondie.

5. Dispositif selon la revendication 3 ou 4, caractérisé en ce que la gaine est constituée par un matériau métallique ou une matière plastique renforcée par des fibres de verre.

6. Dispositif selon la revendication 3, caractérisé en ce que le corps de mesure (3) est conique.

7. Dispositif selon la revendication 3 ou 6, caractérisé en ce que sur la face inférieure du corps de mesure (3) est disposé un poids (4) et/ou un détecteur à immersion (12).

8. Dispositif selon la revendication 3, caractérisé en ce que le dispositif d'immersion est constitué de trois câbles (6, 7) sur lesquels sont fixés le corps de mesure (3) et le dispositif de mesure (2) de la turbidité, les câbles (6, 7) étant enroulés au moyen de cylindres enrouleurs (7, 8) entrainables, qui sont entrainés par un moyen de moteur, un moyen hydraulique ou pneumatique.

9. Dispositif selon l'une des revendications 3 à 8, caractérisé en ce qu'à l'intérieur de la gaine cylindrique (1), il est prévu un dispositif de chauffage (15).

10. Dispositif selon l'une des revendications 3 à 9, caractérisé en ce que la gaine (1) est montée sur un pont se trouvant au dessus d'un bassin de décantation.

Fig. 1